# FASCICULE DE BREVET EUROPEEN

(11) **EP 2 992 315 B1**
(45) Date de publication et mention de la délivrance du brevet: **22.04.2020**
(21) Numéro de dépôt: 14727877.4
(22) Date de dépôt: 30.04.2014
(51) Int. Cl.: G01N 21/90

(54) **PROCÉDÉ ET DISPOSITIF D'OBSERVATION ET D'ANALYSE DE SINGULARITÉS OPTIQUES PORTÉES PAR DES RÉCIPIENTS EN VERRE**
VERFAHREN UND VORRICHTUNG ZUR BEOBACHTUNG UND ANALYSE OPTISCHER SINGULARITÄTEN IN GLASBEHÄLTERN
METHOD AND DEVICE FOR OBSERVING AND ANALYSING OPTICAL SINGULARITIES IN GLASS CONTAINERS

(30) Priorité: 03.05.2013 FR 1354107
(43) Date de publication de la demande: 09.03.2016
(73) Titulaire: Tiama, 69390 Vourles (FR)
(72) Inventeur: LECONTE, Marc, F-69700 Loire sur Rhone (FR); FAYOLLE, Lubin, F-69530 Brignais (FR); PIROT, Eric, F-35510 Cesson-Sevigne (FR)
(74) Mandataire: Cabinet Beau de Loménie
(86) Numéro de dépôt international: PCT/FR2014/051042
(87) Numéro de publication internationale: WO 2014/177814

(56) Documents cités:
- US-A- 4 610 542
- US-A- 4 644 151
- US-B1- 6 424 414

## Description

L'objet de l'invention concerne le domaine technique de l'observation et de l'analyse de singularités optiques portées par des récipients en verre, tels que bouteilles, pots et flacons.

Quelques notions de physiques optique ou mathématique sont rappelées ci-après. En optique, l'exitance d'un point d'une surface lumineuse est le flux émis dans un demi-espace par unité d'aire de la surface émissive centrée en ce point. Cette notion s'appelle parfois émittance ou radiance. Un gradient est la dérivée selon une ou plusieurs directions d'une grandeur autrement dit un gradient signifie la variation de la grandeur. Un gradient d'exitance lumineuse signifie une variation de l'exitance le long de la surface émettrice. Un gradient de couleur signifie de même une variation de la couleur de la lumière émise le long de la surface émettrice. Un diffuseur est un élément en matière transparente ou translucide et diffusant la lumière dans sa masse et/ou en surface.

Par singularités sont désignées des portions restreintes d'un récipient ou de sa surface ayant des propriétés différentes de celles de leur voisinage sur ou dans le récipient. Des singularités optiques désignent donc des portions d'un récipient ayant des propriétés optiques différentes de celles de leur voisinage sur ou dans le récipient. En l'occurrence, ces singularités optiques ont principalement un effet anormal de réfraction et / ou de réflexion par rapport à leur voisinage. Les défauts réfractants et / ou réfléchissants, les codes ou encore les décors de type blason marqués en surface des récipients sont donc des singularités optiques qui dévient la lumière de manière différente par rapport à leur voisinage soit en transmission (dioptres) soit en réflexion spéculaire.

Une vue sera une image au sens optique, c'est-à-dire un signal en deux dimensions de niveau de gris ou de couleur obtenu par une projection du récipient au moyen d'un dispositif optique imageur capable de conjugaison. Une caméra munie d'un objectif réalise au moins une vue. Une caméra peut réaliser simultanément plusieurs vues par exemple à l'aide d'un système de miroirs partageant son champ en N vues différentes. Ces vues sont différentes si les points de vue et les directions d'observation sont différents. Il est possible d'associer à une vue un grandissement Dans la présente demande, le vocable « image » est réservé pour désigner le signal produit par une caméra, une image pouvant contenir plusieurs vues.

Le verre est un matériau transparent à la lumière visible. Toutefois, la transmission pour chaque longueur d'onde dépend de la teinte du verre et de l'épaisseur traversée par la lumière considérée. On mesure la transmission du verre par le rapport (en %) entre la lumière incidente et la lumière transmise pour une épaisseur donnée. Il est même possible à l'aide d'un spectromètre de mesurer la transmission en fonction de la longueur d'onde pour obtenir un spectre de transmission qui caractérise la teinte du verre. Pour certaines teintes de faible transmission, donc très sombres voire d'aspect visuel noir, et/ou pour certaines épaisseurs de verre (parois jusqu'à 5 mm) avec peu de lumière traversant la paroi du récipient, on peut avoir des transmissions en dessous de 1% pour quasiment tout le spectre visible,

La transparence du verre est une propriété largement exploitée pour permettre des inspections optiques en réalisant des images en transmission des récipients et analysant ces images. Les procédés les plus courants consistent à rétro-éclairer les récipients par une source de lumière étendue uniforme, et faire des images des récipients. Deux phénomènes connus du domaine de l'optique géométrique sont utilisés : l'absorption par des défauts dits opaques ou de transmission optique différente du verre (corps étranger ou surépaisseur de verre teinté) et la réfraction de la lumière par des singularités en surface comme des plis, des rivières, des bouillons crevés, ou des manques de matière comme des bulles dans la paroi, ou encore des inclusions d'indice optique différent.

Pour améliorer la détection des défauts dits réfractants en renforçant leur contraste dans les images, le brevet US 4 487 322 propose d'utiliser une source de lumière présentant un gradient d'exitance lumineuse. Puisqu'ils dévient la lumière, les défauts ne sont pas éclairés par la même partie de la source que leur voisinage, et du fait du gradient d'exitance de la source, ils n'ont pas dans l'image; le même niveau lumineux perçu que leur voisinage.

Le brevet US 6 424 414 décrit un procédé et un appareil pour détecter des défauts réfractant la lumière, susceptibles d'être présentés par des récipients transparents. L'appareil décrit par ce brevet comporte une source lumineuse présentant un gradient de lumière dans une direction selon l'axe du récipient. La source lumineuse est alignée avec une caméra recevant la lumière passant à travers le récipient. Si un tel appareil est adapté pour détecter en transmission des défauts réfractants la lumière, cet appareil n'est pas adapté pour acquérir des images en réflexion du récipient pour en particulier, permettre l'analyse de marques ou de codes réalisés en surface sur des récipients présentant un faible ou fort pouvoir de transmission.

Il est connu pour des récipients en verre, de graver dans les moules sous forme de perles, un code de numéro de moule. Lorsque des marques ou codes tels que des numéros de moule sont réalisés par moulage, les reliefs obtenus sur les récipients sont élevés (surépaisseur > 0.5 mm) et ces reliefs (dits « perles ») sont de taille de l'ordre du millimètre (diamètre > 0.8 mm).

Il est connu de relire les numéros de moule des récipients réalisés par moulage dans des dispositifs qui consistent à mettre chaque récipient en rotation et illuminer les perles au moyen de rayons lumineux focalisés et directifs (faisceaux lumineux étroits, restreints et peu ou pas divergents). Lesdits rayons lumineux ayant tous une incidence voisine se réfléchissent sur les perles selon une direction précise définie par l'angle incident et l'angle des perles. Les capteurs captent des réflexions et les décodent. De tels systèmes fonctionnent uniquement sur des reliefs de taille assez importante et en mettant les récipients en rotation, ce qui est couteux et perturbe les lignes de fabrication généralement à déplacement linéaire.

Le brevet FR 2 780 533 enseigne un dispositif utilisant ce procédé optique de réflexion sur le récipient de la lumière focalisée émise par une source, mais adapté à la lecture dans des dispositifs transportant les récipients en simple translation, ce qui est beaucoup plus rapide et plus économique à exploiter que les systèmes de rotation, Les moyens optiques sont adaptés pour permettre d'obtenir une image de l'ensemble du jable portant le code, le jable apparaissant noir et le code blanc. Les faisceaux lumineux incidents focalisés sont amenés sur la périphérie sous forme d'un cône lumineux, et les rayons réfléchis par les perles, et uniquement ceux-ci, sont ramenés par un miroir conique sous forme d'image plane dans un dispositif d'analyse. Les dispositifs de ce type sont efficaces pour des codes de relief relativement élevé, par exemple supérieur à 0.5 mm. Il faut en effet qu'une surface suffisante des perles soit capable de renvoyer un flux lumineux important dans la direction d'observation unique, le reste de la lumière incidente étant réfléchie dans une toute autre direction par la surface d'arrière-plan portant lesdits reliefs,

Autrement dit, ces techniques avec un éclairage directif et un angle d'observation prédéfini ne fonctionnent que pour des reliefs élevés afin que la direction des rayons lumineux réfléchis par les perles s'écarte suffisamment de la direction des rayons lumineux réfléchis par la surface d'arrière-plan. Il est à noter que ce type de système permet de visualiser la lumière réfléchie par les reliefs qui apparaissent blancs par rapport à une surface (un fond) qui reste noire. Par ailleurs, le contraste élevé donne une information quasiment binaire, les perles sont vues ou pas vues, seulement des parties de perles sont distinguées, mais ceci toujours avec une intensité très forte par rapport à leur voisinage. En cas de relief faible par exemple en raison de l'usure des moules, les surfaces blanches correspondant aux perles dans l'image sont réduites voire non observables.

Le brevet US 4 644 151 reprend l'art antérieur classique mais propose d'utiliser une caméra avec une source pourvue d'un gradient d'exitance selon une direction parallèle à l'axe de rotation du récipient. Ce système impose donc la mise en rotation du récipient avec les nombreux inconvénients décrits précédemment. Il n'est pas adapté à la lecture de codes sur des récipients en défilement.

Lorsque les marques, par exemple un code Datamatrix, sont réalisées par laser sur du verre chaud comme dans le brevet FR 2 907 370, les reliefs en surface des récipients en verre sont beaucoup plus faibles que dans le cas des numéros de moule, et de plus, les points du code sont beaucoup plus petits, avec des diamètres inférieurs à 0.3 mm. La solution consiste à obtenir prioritairement un éclairage uniforme et à faire une série d'images matricielles de la paroi du récipient en rotation. La source est étendue et uniforme (sans trou), ce qui fournit un arrière-plan uniforme à l'image, mais de dimension néanmoins limitée pour permettre un certain contraste. Ce système convient donc pour des marquages de type Datamatrix obtenus par un faisceau laser sur des récipients encore chauds, donc à reliefs réduits. Cependant, ce système impose la mise en rotation du récipient et n'est pas adapté à la lecture de codes sur des récipients en défilement.

La présente invention vise donc à remédier aux inconvénients de l'art antérieur en proposant une nouvelle technique optique d'observation et d'analyse de singularités optiques pouvant ne présenter qu'un faible pouvoir réfractant et portées par des récipients.

L'objet de l'invention vise à offrir une nouvelle technique permettant d'observer et d'analyser des singularités optiques portées en surface ou dans la paroi d'un récipient, et cela quelle que soit la transmission du matériau constitutif du récipient.

Pour atteindre un tel objectif, la présente invention concerne un procédé d'observation et d'analyse de singularités optiques, déviant la lumière, portées en surface ou dans la paroi d'un récipient en verre possédant un axe de symétrie, consistant :
- à éclairer le récipient au moyen d'une source de lumière diffuse présentant une variation d'une propriété de la lumière selon une direction de variation,
- à disposer d'au moins un dispositif d'acquisition d'images sensible à ladite propriété de la lumière et à sa variation, afin de réaliser au moins une vue d'une portion de récipient susceptible de contenir des singularités optiques observées à partir d'au moins un point de vue selon un axe d'observation,
- et à traiter au moins une vue afin d'analyser les singularités optiques.

Selon l'invention, le procédé consiste :
- à éclairer l'extérieur du récipient à l'aide d'une surface lumineuse de symétrie axiale autour d'un axe vertical parallèle à l'axe de symétrie des récipients, avec la direction de variation de la propriété de la lumière suivant une génératrice de la surface lumineuse en tout point de la surface lumineuse,
- dans le cas de récipients de faible transmission, à réaliser la vue de la portion de récipient par le dispositif d'acquisition d'images recevant les faisceaux lumineux provenant d'une portion de la surface lumineuse de symétrie axiale située du même côté du récipient que le point de vue, et qui sont réfléchis par la surface du récipient selon les lois de la réflexion spéculaire,
- ou dans le cas de récipients de forte transmission, à réaliser la vue de la portion de récipient par le dispositif d'acquisition d'images recevant les faisceaux lumineux provenant d'une portion de la surface lumineuse de symétrie axiale diamétralement opposée au point de vue par rapport au récipient et qui sont transmis à travers les parois du récipient selon les lois de la réfraction.

De plus, le procédé selon l'invention peut consister en outre en la combinaison d'au moins l'une et/ou l'autre des caractéristiques additionnelles suivantes :
- à considérer les récipients comme de forte transmission lorsque apparaissent dans l'image, de manière à interférer avec l'observation des singularités optiques, des taches parasites générées par des rayons lumineux parasites se propageant sans atténuation dans la paroi et à considérer comme de faible transmission des récipients dans lesquels lesdits rayons lumineux parasites sont absorbés par la teinte du matériau au point de ne pas perturber l'analyse des singularités optiques,
- à assurer le défilement des récipients, sans rotation autour de leur axe, selon une direction de déplacement perpendiculaire et sensiblement sécante à l'axe de symétrie vertical de la surface lumineuse de symétrie axiale,

- à aménager dans deux côtés opposés de la surface lumineuse de symétrie axiale, des passages pour au moins une partie du récipient en défilement,
- à réaliser plusieurs vues de la portion du récipient susceptibles de contenir des singularités optiques, selon des axes d'observation différents répartis angulairement autour de l'axe vertical du récipient afin d'assurer une analyse complète voire redondante de la périphérie du récipient,
- à réaliser plusieurs vues obtenues au moyen d'une combinaison de caméras et de systèmes optiques de manière que le nombre de caméras soit inférieur ou égal au nombre de points de vues et de directions d'observation,
- à orienter les axes d'observation en contre-plongée pour l'analyse des singularités optiques situées sur le col des récipients,
- à analyser comme singularités optiques des marquages et les interpréter pour obtenir une information relative au récipient ou à sa fabrication pour au moins une des opérations parmi le tri, le traçage, l'identification, la datation, l'authentification du récipient,
- à détecter et/ou identifier les singularités optiques en tant que défauts des récipients,
- lors de l'observation d'un récipient, on illumine séparément et successivement des portions angulaires différentes de la surface lumineuse de symétrie axiale en même temps que l'on acquiert de manière synchrone à leur allumage, des vues à partir de points de vues opposés ou du même côté par rapport au récipient desdites portions angulaires,
- éclairer avec une source de lumière diffuse dont la propriété de la lumière qui varie suivant une génératrice de la surface lumineuse de symétrie axiale est l'exitance de la surface lumineuse,
- la propriété de la lumière qui varie suivant une génératrice de la surface lumineuse de symétrie axiale est la couleur de lumière émise,
- le spectre d'émission de la source de lumière est adapté de manière à augmenter ou réduire voire supprimer l'énergie des faisceaux lumineux transmis à travers les parois du récipient.

La présente invention a également pour but de proposer une technique apte à fonctionner avec ou sans mise en rotation des récipients. Elle permet donc en particulier l'analyse de singularités optiques portées par des récipients se déplaçant en défilement selon une trajectoire curviligne ou plus simplement encore en translation pure selon la direction de défilement

Un autre objet de l'invention est de proposer un dispositif d'observation et d'analyse de singularités optiques déviant la lumière, portées en surface ou dans la paroi d'un récipient en verre possédant un axe de symétrie, comprenant :
- une source de lumière diffuse présentant une variation d'une propriété de la lumière selon une direction de variation,
- au moins un dispositif d'acquisition d'images afin de réaliser au moins une vue d'une portion de récipient susceptible de contenir des singularités optiques observées à partir d'au moins un point de vue selon un axe d'observation,
- des moyens de traitement d'au moins une vue afin d'analyser les singularités.

Selon l'invention :
- la surface lumineuse est positionnée pour éclairer l'extérieur du récipient, cette surface étant une surface de symétrie axiale autour d'un axe vertical parallèle à l'axe de symétrie des récipients, avec en tout point de la surface lumineuse de symétrie axiale, la direction de variation de la propriété de la lumière suivant une génératrice de la surface lumineuse,
- dans le cas de récipients de faible transmission, le dispositif d'acquisition d'image est apte à réaliser la vue de la portion de récipient depuis un point de vue pour recevoir les faisceaux lumineux provenant d'une portion de la surface lumineuse de symétrie axiale située du même côté du récipient que le point de vue, et qui sont réfléchis par la surface du récipient,
- ou dans le cas de récipients de forte transmission, le dispositif d'acquisition d'image est apte à réaliser la vue de la portion de récipient depuis un point vue pour recevoir les faisceaux lumineux provenant d'une portion de la surface lumineuse de symétrie axiale diamétralement opposée au point de vue par rapport au récipient, et qui sont transmis à travers les parois du récipient.

De plus, le dispositif selon l'invention peut présenter en outre en combinaison au moins l'une et/ou l'autre des caractéristiques additionnelles suivantes :
- la surface lumineuse de symétrie axiale est une surface de révolution, par exemple un cylindre, un tronçon de cône, un hémisphère ou un disque,
- l'exitance de la surface lumineuse de symétrie axiale varie en tout point de la surface lumineuse de symétrie axiale, suivant une génératrice de ladite surface,
- la couleur de lumière émise par la surface lumineuse de symétrie axiale varie en tout point de la surface lumineuse de symétrie axiale, suivant une génératrice de ladite surface,
- la source de lumière comporte au moins un anneau d'éclairage éclairant l'extrémité inférieure ou supérieure d'un diffuseur cylindrique ou tronconique,
- la source lumineuse de symétrie axiale comporte un anneau d'éclairage éclairant un hémisphère diffuseur de la lumière, à l'opposé de son plan équatorial, de manière variable en fonction du point du diffuseur considéré mais à symétrie d'axe égal à l'axe de l'hémisphère,
- la source de lumière comporte un disque diffuseur pian éclairé en son centre par une source ou à sa périphérie par un anneau d'éclairage, de manière variable en fonction du point du diffuseur considéré mais à symétrie d'axe égal à l'axe du disque,
- le spectre d'émission de la source de lumière est adapté de manière à augmenter ou réduire voire supprimer l'énergie des faisceaux lumineux transmis à travers les parois du récipient,
- la source de lumière comporte un diffuseur éclairé complètement et contre lequel est plaqué d'un côté ou de l'autre, un film dont la transmission varie au moins pour une longueur d'onde suivant une génératrice de la surface lumineuse,
- la surface lumineuse de symétrie axiale comporte différents secteurs angulaires pilotés sélectivement en allumage et/ou extinction,
- la surface lumineuse de symétrie axiale est pourvue d'un passage d'entrée et d'un passage de sortie pour une partie d'un récipient, disposés symétriquement par rapport à l'axe vertical,
- une série de dispositifs d'acquisition d'image placés autour de l'axe vertical pour observer le récipient selon plusieurs vues permettant d'observer toute ou partie de sa périphérie,
- les dispositifs d'acquisition d'image sont positionnés avec un axe d'observation en contre-plongée faisant un angle compris entre 3° et 10° par rapport à l'horizontale,

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en perspective d'une première variante de réalisation d'un dispositif d'observation et d'analyse conforme à l'invention, comportant une surface lumineuse présentant une symétrie axiale et par exemple de type cylindrique.
La **Figure 2** est une vue en élévation du dispositif d'observation et d'analyse illustré à la **Fig. 1****.**
La **Figure 3** est un schéma de principe illustrant le cheminement des rayons lumineux provenant d'une source lumineuse à gradient d'exitance constant et non nul, récupéré par un système d'acquisition d'images.
Les **Figures 3A, 3B** sont des exemples de réalisation d'une source lumineuse présentant un gradient d'exitance respectivement constant et non nul, ou variable monotone selon une courbe polynomiale.
La **Figure 4** est un schéma illustrant le principe de fonctionnement de l'invention en mode transmission.
La **Figure 5** est un schéma explicitant le principe de fonctionnement de l'invention pour un mode de fonctionnement en réflexion.
Les **Figures 6** et **7** sont des schémas illustrant le principe de cheminement des rayons lumineux pour des récipients respectivement de forte transmission et de faible transmission.
La **Figure 8** illustre un autre exemple de réalisation d'une source de lumière mettant en œuvre une surface lumineuse de symétrie axiale du type tronconique.
La **Figure 9** illustre une autre variante de réalisation de la source lumineuse comportant une surface lumineuse de symétrie axiale de type hémisphérique.
La **Figure 10** illustre une autre variante de réalisation d'une source lumineuse comportant un disque de diffusion plan.

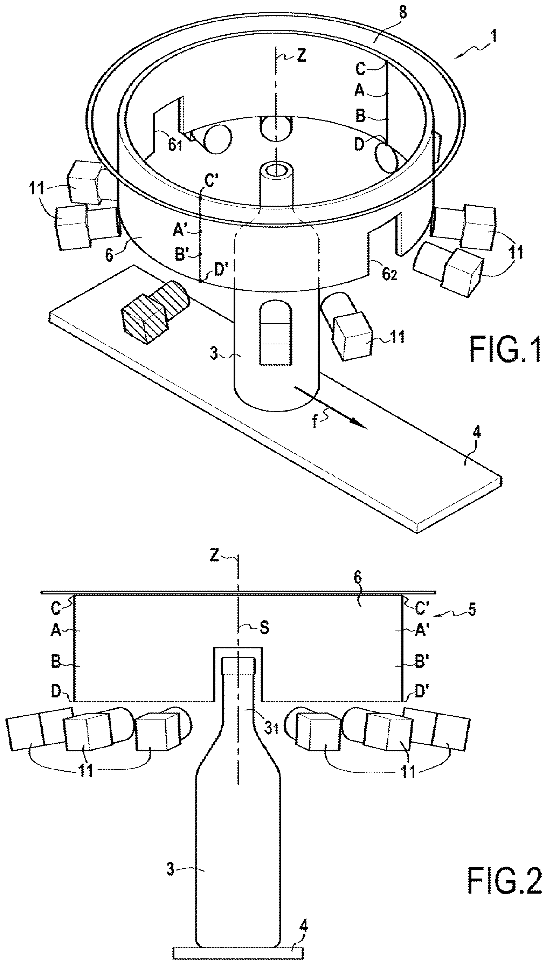

Tel que cela ressort plus précisément des **Fig. 1** à **3****,** l'objet de l'invention concerne un dispositif **1** d'observation et d'analyse de singularités optiques **2** déviant la lumière, portées en surface ou dans la paroi d'un récipient **3** en verre possédant un axe de symétrie **S.** Selon un exemple préféré de réalisation, le récipient **3** est amené à défiler selon une trajectoire curviligne ou plus simplement encore en translation selon une direction de défilement représentée par la flèche **f** de manière à pouvoir être observé par le dispositif **1.** Ainsi, les récipients **3** sont déplacés par exemple à l'aide d'un convoyeur **4,** pour défiler successivement devant le dispositif **1.**

Dans l'exemple illustré sur les dessins, le dispositif **1** est particulièrement adapté pour observer des singularités optiques portées par le col **3₁** des récipients. A titre de singularités optiques, il peut être prévu d'observer et d'analyser un code gravé par exemple par laser sur le col ou un blason ou décor réalisé par moulage. Bien entendu, le dispositif **1** peut être adapté pour observer des singularités optiques portées par d'autres parties des récipients, comme le jable ou l'épaule par exemple. Selon une autre variante de réalisation, les singularités optiques sont des défauts devant être détectés.

Le dispositif **1** comprend une source de lumière étendue et diffuse **5** présentant une surface lumineuse **6** de symétrie axiale autour d'un axe vertical **Z** parallèle voire confondu avec l'axe de symétrie **S** des récipients **3.** Conformément à l'invention, la surface lumineuse **6** de symétrie axiale présente, selon une direction de variation de cette surface lumineuse, un gradient ou une variation d'au moins une propriété de la lumière, c'est-à-dire une grandeur qui caractérise la lumière émise et est mesurable par un dispositif d'acquisition d'image, telle que sa couleur ou son intensité totale émise c'est-à-dire plus précisément son exitance, ou bien encore sa durée d'allumage dans un fonctionnement puisé. Cette variation d'au moins une propriété de la lumière est en tout point de la surface lumineuse le long d'une courbe constituée de l'intersection de la surface lumineuse avec un plan contenant l'axe **Z** et sera désignée par génératrice dans la suite de la description. Autrement dit, la propriété de la lumière émise suit une loi de distribution sur la surface lumineuse **6** qui d'une part possède la symétrie autour de l'axe vertical de symétrie **Z** de la surface **6,** et d'autre part présente un gradient le long d'une génératrice c'est-à-dire de la courbe constituée de l'intersection de la surface lumineuse avec un plan contenant l'axe vertical de symétrie **Z**.

Dans la réalisation préférée de l'invention, la surface de symétrie axiale sera de plus une surface de révolution totale comme un cylindre ou partielle comme deux portions de cylindres coupés selon les génératrices. Ainsi, dans le cas où la surface lumineuse de symétrie axiale n'est pas de révolution, il est également considéré que la variation de la propriété de la lumière est suivant une génératrice de cette surface.

Lorsque la surface est de révolution, la propriété de la lumière émise varie en tout point lumineux le long de la génératrice de la surface lumineuse de révolution. Il découle de ce gradient qu'en tout point de la surface, le long de la génératrice passant par ce point, il existe une variation de la propriété et donc, la lumière issue de points sources voisins portés par cette génératrice de la surface n'a pas la même valeur de ladite propriété.

Selon un autre mode de réalisation, la surface lumineuse de symétrie axiale est de section horizontale polygonale, par exemple hexagonale, octogonale etc. Dans cette variante de réalisation de l'invention, la variation de la propriété lumineuse est selon une génératrice qui est déterminée par l'intersection de la surface lumineuse de symétrie avec un plan contenant l'axe vertical de symétrie **Z.**

Dans la réalisation préférée de l'invention, la propriété de la lumière qui varie est l'exitance. Autrement dit la surface présente un gradient d'exitance **I** selon une direction de variation suivant une génératrice de cette surface lumineuse de symétrie axiale.

Selon l'exemple de réalisation illustré aux **Fig. 1** et **2****,** la surface lumineuse de symétrie axiale est également de révolution **6**, sous la forme d'un cylindre présentant un axe vertical **Z** de symétrie. L'exitance lumineuse **I** varie entre un point **C** et un point **D**, selon une direction qui correspond à une génératrice du cylindre **6** parallèle à l'axe vertical **Z.** Compte tenu de la symétrie axiale de la surface lumineuse **6,** une génératrice **C' D'** de la surface lumineuse se trouve diamétralement opposée à la génératrice **C D** de la surface lumineuse. Selon la variante de réalisation illustrée aux **Fig. 1** et **2****,** la source de lumière **5** comporte un anneau d'éclairage **8** éclairant l'extrémité supérieure d'un diffuseur cylindrique formant la surface lumineuse de symétrie axiale **6.** L'anneau d'éclairage **8** comporte une ou plusieurs sources lumineuses de tous types adaptées pour permettre l'éclairement variable de l'extrémité supérieure à l'extrémité inférieure du diffuseur. En éclairant partiellement un diffuseur, par exemple au voisinage d'une de ses extrémités par un anneau de lumière, ledit anneau ayant un cône d'émission, la variation d'exitance **I** résulte de l'éclairement variable du diffuseur et/ou de la diffusion par le diffuseur.

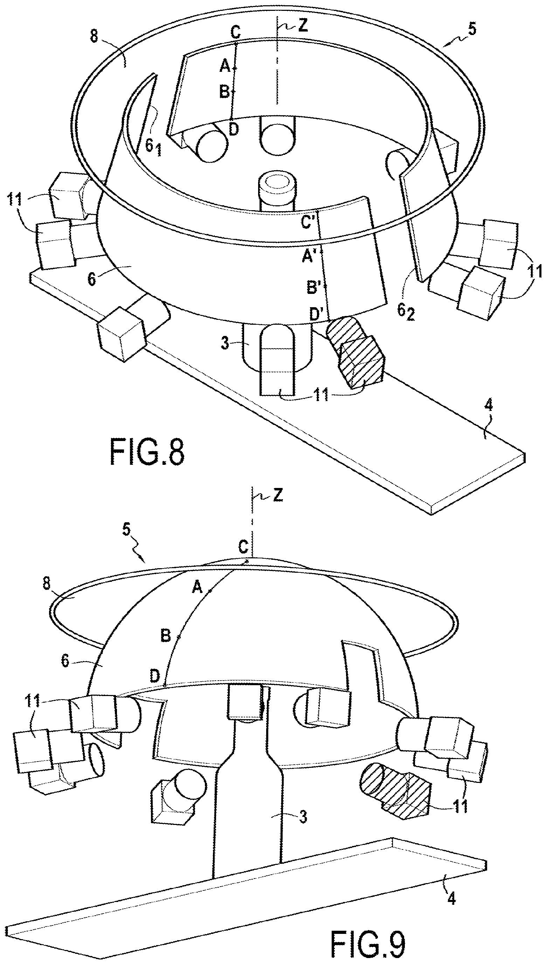

Bien entendu, la surface de symétrie axiale **6** peut être différente d'un cylindre. Selon les exemples illustrés aux **Fig. 8, 9** et **10,** la surface lumineuse de symétrie axiale **6** est respectivement un tronçon de cône, un hémisphère et un disque. Les génératrices **C D** et **C' D'** symétriquement opposées par rapport à l'axe vertical de symétrie **Z** sont schématisées sur les dessins.

Dans l'exemple illustré à la **Fig. 8****,** la surface lumineuse de symétrie axiale **6** comporte deux portions de troncs de cônes coupées selon les génératrices du tronc de cône dont sont issues lesdites portions. La variation de la propriété de la lumière est le long des génératrices des portions de troncs de cône c'est-à-dire le long de la courbe constituée de l'intersection des portions de troncs de cône avec le plan contenant l'axe vertical **Z.** L'exitance lumineuse **I** varie selon une direction qui correspond à une génératrice du tronc de cône **6** entre les points **C** et **D.** Selon l'exemple de réalisation illustré à la **Fig. 8****,** les deux portions de troncs de cône s'inscrivent ainsi dans un tronc de cône pouvant être considéré comme discontinu. Bien entendu, il peut être prévu que la surface lumineuse de symétrie axiale **6** soit de révolution complète ou continue, avec une base de préférence circulaire, avec un axe vertical de symétrie **Z.** Selon la variante de réalisation illustrée à la **Fig. 8****,** la source de lumière **5** comporte un anneau d'éclairage **8** éclairant l'extrémité supérieure d'un diffuseur tronconique formant la surface lumineuse de symétrie axiale **6.**

Selon l'exemple de réalisation illustré à la **Fig. 9****,** la surface lumineuse de symétrie axiale **6** est également de révolution et hémisphérique avec un axe vertical **Z** de symétrie. L'exitance lumineuse **I** varie selon une direction qui correspond à une génératrice de l'hémisphère **6** entre les points **C** et **D.** Selon la variante de réalisation illustrée, la source de lumière **5** comporte un anneau d'éclairage **8** illuminant un hémisphère diffuseur de la lumière formant la surface lumineuse de symétrie axiale **6,** à l'opposé de son plan équatorial.

Selon la variante de réalisation illustrée à la **Fig. 10,** la source de lumière **5** comporte un diffuseur plan tel un disque formant la surface lumineuse de symétrie axiale **6** et d'axe vertical **Z** de symétrie. Le disque diffuseur est éclairé par une lumière d'éclairage **8** soit à sa périphérie soit en son centre comme représenté sur le dessin. L'exitance lumineuse **I** varie selon les génératrices entre les points **C** et **D** c'est-à-dire selon les rayons du disque **6.**

Dans les exemples décrits ci-dessus, le gradient d'exitance **I** est obtenu à partir de l'éclairement variable suivant une direction donnée d'un corps assurant la diffusion de la lumière. Bien entendu, le gradient d'exitance **I** peut être obtenu de manière différente.

Plus généralement, la variation de la propriété de la lumière, par exemple, le gradient de couleur ou d'exitance **I,** peut être produit par une teinte appliquée en surface ou dans la masse de la surface lumineuse diffusante **6** de la source ou en plaçant un filtre de transmission spectrale variable devant la surface lumineuse diffusante.

Il est à noter que si l'on considère une génératrice quelconque de la surface, la fonction décrivant la variation de la propriété de la lumière utilisée peut prendre différentes formes entre les points **C** et **D.**

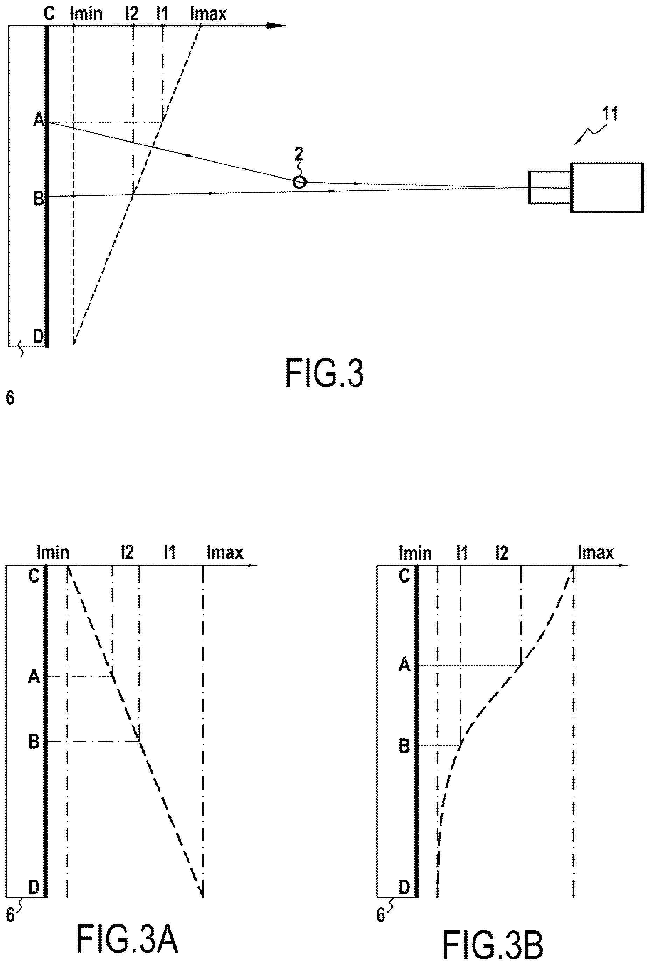

De préférence, pour garantir qu'une variation selon la génératrice est maintenue en tout point de la surface, la variation est continue et monotone entre les points **C** et **D.** Comme illustré à titre d'exemple dans les **Fig. 3, 3A** ou **3B**, la variation de l'exitance peut être selon un gradient constant positif (**Fig. 3**), un gradient constant négatif (**Fig. 3A**), une portion de fonction polynomiale continue (**Fig. 3B**).

Selon une caractéristique de l'invention, la surface lumineuse de symétrie axiale **6** est positionnée pour éclairer l'extérieur du récipient **3** et en particulier la surface extérieure du récipient devant être observée et susceptible de contenir des singularités optiques **2.** La surface lumineuse de symétrie axiale **6** est positionnée de manière que l'axe vertical **Z** soit perpendiculaire et sensiblement sécant à la direction de défilement **f** des récipients sans toutefois gêner le mouvement des récipients.

Selon une caractéristique de réalisation, la source de lumière **5** est pourvue d'un passage d'entrée **6₁** et d'un passage de sortie **6₂** pour une partie d'un récipient, disposés symétriquement par rapport à l'axe vertical **Z.** Ainsi, tel que cela ressort plus particulièrement des variantes de réalisation illustrées aux **Fig. 1****,** **8** et **9****,** la surface lumineuse de symétrie axiale **6** est pourvue en tant que passages d'entrée et de sortie **6₁, 6₂,** de deux découpes de forme adaptée à la partie correspondante du récipient les traversant. Pour l'observation du col ou de l'épaule des récipients, les passages d'entrée et de sortie **6₁, 6₂** sont adaptés pour permettre le passage de tout ou partie du col des récipients. Dans l'exemple illustré à la **Fig. 8****,** les passages d'entrée et de sortie **6₁**, **6₂** coupent en deux parties la surface lumineuse de symétrie axiale **6.** Bien entendu, de tels passages d'entrée et de sortie **6₁, 6₂** qui débouchent sur les deux extrémités de la surface lumineuse peuvent être aménagées dans les variantes illustrées aux **Fig. 1** et **9****.** Dans le cas d'une surface lumineuse de symétrie axiale **6** réalisée sous la forme d'un disque, ce dernier s'étend au-dessus du goulot des récipients. Dans le cas de l'observation du jable des récipients **3,** la source de lumière **5** est disposée de manière symétriquement inversée par rapport au haut et bas du récipient,

Le dispositif **1** selon l'invention comporte également au moins un et dans les exemples illustrés sur les **Fig. 1****,** **8, 9** et **10** plusieurs dispositifs d'acquisition d'images **11** afin de réaliser au moins une vue d'une portion de récipient **3** susceptible de contenir des singularités optiques **2** observées à partir d'au moins un point de vue **P** selon un axe d'observation **X.** Classiquement, chaque dispositif d'acquisition d'images **11** comporte une caméra matricielle munie d'un objectif. Les dispositifs d'acquisition d'images **11** sont reliés à des moyens de traitement d'au moins une et d'une manière générale de plusieurs vues prises afin d'analyser les singularités optiques présentes.

Ainsi, les moyens de traitement des vues consistent à analyser comme singularités optiques, des marquages et à les interpréter pour obtenir une information relative au récipient ou à sa fabrication pour au moins une des opérations parmi le tri, le traçage, l'indentification, la datation, l'authentification du récipient. Par exemple, de telles singularités optiques peuvent être des codes gravés par laser sur les récipients et notamment au niveau du col. Selon un autre exemple d'application, de telles singularités optiques peuvent être des blasons ou des décors portés par les récipients. Selon une autre application, les singularités optiques sont des défauts réfractant présentés par les récipients **3.**

Selon l'invention, il résulte de la symétrie de la surface lumineuse autour de l'axe vertical de symétrie **Z,** sensiblement confondu en général avec l'axe **S** de symétrie des récipients, que pour toute portion illuminant un coté du récipient est située diamétralement opposé par rapport à l'axe **Z** et généralement à l'axe de symétrie **S,** une autre portion de surface lumineuse et d'intensité sensiblement identique.

Cela permet depuis un point de vue **P** et selon une direction d'observation **X** donnés, de recevoir à la fois la lumière transmise au travers du récipient depuis une portion opposée de la source, et, ou bien issue d'une portion de la source située du même côté que le récipient et se réfléchissant sur la paroi du récipient.

La **Fig. 3** permet d'illustrer dans un plan de coupe comprenant l'axe de symétrie **Z** de la source **5** et la direction d'observation **X** le principe de collecte des rayons lumineux permettant la détection des singularités optiques **2.** La propriété de la lumière varie entre deux points **C** et **D** de la portion de source opposée au point de vue **P** par rapport au récipient. Dans la variante préférée, dans laquelle la source présente un gradient d'exitance, l'exitance **I** entre les points **C** et **D** de la source varie entre des valeurs extrêmes **Imin** et **Imax.** Le rayon lumineux émis par la surface lumineuse **6** au point **A** est dévié par la singularité optique **2** présentant un pouvoir réfractant. Ce rayon lumineux qui provient du point **A** de la surface lumineuse d'exitance égale à **I1** est collecté par l'objectif de la caméra **11.** Le rayon lumineux émis par la surface lumineuse de symétrie axiale **6** au point **B** passe au voisinage immédiat de la singularité optique **2,** sans être dévié, pour être ensuite collecté par l'objectif de la caméra et atteindre le capteur de la caméra au voisinage du point de collecte du rayon issu du point **A.** Ce rayon lumineux est émis par la surface lumineuse de symétrie axiale **6** au point **B** d'exitance de valeur égale à **I2.** Dans la mesure où la surface lumineuse de symétrie axiale **6** possède un gradient d'exitance selon une génératrice passant par le point **A** et par le point **B,** les valeurs d'exitance **I1** et **I2** diffèrent d'autant que les points **A** et **B** sont éloignés, donc les valeurs d'exitance **I1** et **I2** diffèrent d'autant que la déviation par une singularité optique **2** est forte, si bien que dans la vue, un contraste remarquable est observé à l'endroit de la singularité optique, ledit contraste augmentant avec le pouvoir réfractant des singularités optiques. Les moyens de traitement associés à la caméra sont adaptés pour détecter ces contrastes et les analyser afin de reconnaître ou identifier les singularités optiques qui y correspondent. Il est à noter que si la source lumineuse ne possédait pas de gradient d'exitance, alors les valeurs d'exitance **I1** et **I2** seraient égales de sorte qu'il n'y aurait pas de contraste généré à l'endroit de la singularité optique, ce qui ne permettrait pas sa détection.

Dans le cas où la propriété de la lumière qui varie entre **C** et **D** est la couleur de la source, la caméra est une caméra couleur. Selon ce mode de réalisation, la couleur de la lumière émise par les points **A** et **B** est différente et les moyens de traitement associés à la caméra couleur sont adaptés pour détecter des contrastes ou écarts de couleur. Par variation de couleur, on entend une variation perceptible par la caméra **11,** de la composition spectrale de la lumière détectée.

Selon cette variante de réalisation, la couleur varie progressivement entre les points **C** et **D,** par exemple du rouge au bleu. Ce résultat peut être obtenu par exemple par l'utilisation d'un filtre multicolore, ou grâce à l'utilisation de diodes électroluminescentes de différentes couleurs positionnées, orientées et commandées en tension, courant et/ou en durées d'impulsions, de telle manière que la couleur perçue varie entre les points **C** et **D.**

Selon une caractéristique de l'invention, le procédé fonctionne de manière adaptée à la transmission optique des récipients **3.** Ainsi, les récipients **3** sont considérés comme de forte transmission lorsque, en observant en réflexion les singularités optiques **2** et la surface externe du récipient soumises à un éclairement incident, au moyen des systèmes d'acquisition **11,** apparaissent dans l'image, de manière à interférer avec l'observation des singularités optiques, des taches parasites générées par des rayons lumineux parasites se propageant sans atténuation dans la paroi des récipients. Ces taches parasites peuvent provenir par exemple de la réflexion de la source de lumière dans le récipient, de la réflexion de la source de lumière sur la surface interne du récipient, de la réflexion sur la surface interne du récipient de l'image de singularités optiques à observer, etc..

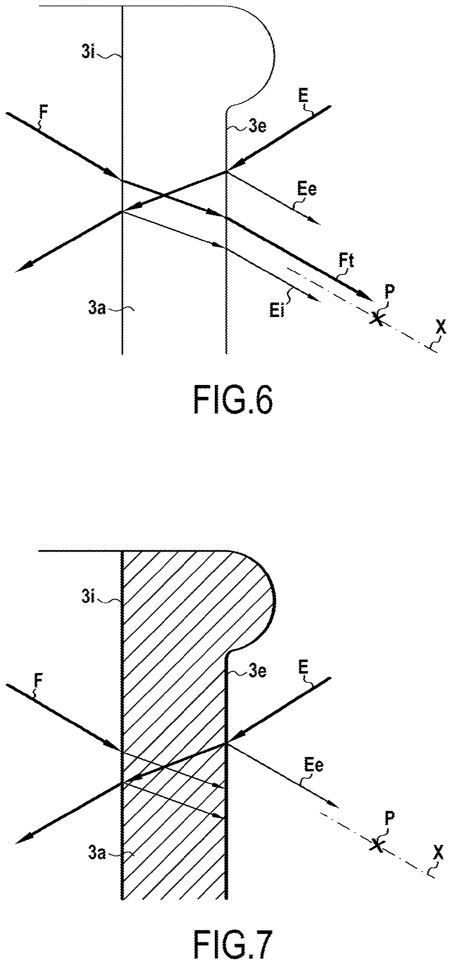

La **Fig. 6** montre une portion d'une paroi **3a** du récipient **3** délimitée par une surface intérieure **3i** et une surface extérieure **3e.** Par souci de simplification, l'autre paroi du récipient, traversée par les rayons transmis **F** n'est pas représentée. Les rayons lumineux provenant de la portion **C D** de la surface lumineuse et ayant traversés la première paroi sont notés **F** tandis que les rayons lumineux provenant de la portion **C' D'** de la surface lumineuse symétriquement opposée sont notés **E.** Dans le cas d'un récipient présentant une forte transmission, les rayons lumineux **E** (provenant de la portion **C'D'** de la surface lumineuse) éclairant la surface extérieure **3e** conduisent à l'apparition de rayons lumineux **Ee** réfléchis par la surface extérieure **3e** et de rayons lumineux **Ei** réfléchis par la surface intérieure **3i.** En raison de la forte transmission du récipient, les rayons **Ei** réfléchis par la surface intérieure **3i** sont peu atténués par le matériau du récipient et peuvent alors constituer des réflexions parasites pour lesquelles l'énergie lumineuse associée n'est pas négligeable par rapport à celle associée aux rayons **Ee** réfléchis par la surface extérieure **3e** qui portent l'information sur les singularités optiques. En conséquence, dans l'image obtenue, l'énergie transportée par les rayons lumineux parasites **Ei** est à même de gêner l'analyse des rayons lumineux **Ee** et par conséquent l'analyse d'une éventuelle singularité optique **2.** Plus particulièrement, en raison de la forte transmission du récipient, les singularités optiques **2** de la surface externe **3e** sont réfléchies sur la surface intérieure **3i,** pouvant ainsi provoquer un dédoublement parasite d'image perturbant pour l'analyse des singularités optiques, qui est particulièrement gênant lorsque les rayons lumineux **Ei** réfléchis par la surface intérieure **3i** se mélangent aux rayons **Ee** réfléchis par la surface externe **3e** et correspondant à une singularité optique **2.** Toutefois, les rayons lumineux **Ft** ayant traversé le récipient **3** et provenant des rayons **F** issus de la portion **C D** de la surface lumineuse **6** atteignent le point de vue **P** en étant peu ou non absorbés, en raison de la nature de forte transmission du récipient. Aussi, les rayons lumineux réfléchis **Ee, Ei** sont négligeables devant l'intensité des rayons lumineux transmis **Ft** de sorte que l'image obtenue à partir de la lumière transmise n'a pas ou peu de tâches parasites.

Les récipients **3** de faible transmission sont les récipients dans lesquels les rayons lumineux parasites sont absorbés par la teinte du matériau au point de ne pas perturber l'analyse des singularités optiques. Cela s'observe lorsque les réflexions parasites de la source de lumière dans le récipient sont absorbées par la teinte du matériau au point de ne pas perturber l'analyse des singularités optiques **2.** Comme illustré à la **Fig. 7****,** en raison de la faible transmission du récipient, les rayons lumineux **E** de l'éclairage issus de la portion **C' D'** sont atténués lors de la traversée de la paroi **3a** du récipient, de manière suffisante afin que leur énergie lumineuse restante au niveau du dispositif d'acquisition d'images **11** soit trop faible pour former dans la vue un dédoublement de la singularité optique **2.** (Les rayons **Ei** réfléchis par la surface intérieure **3i** sont d'intensité négligeable). Le dispositif d'acquisition d'images **11** récupère ainsi uniquement les rayons lumineux réfléchis **Ee** par la surface extérieure **3e.** De même, les rayons **F** issus de la portion **C D** de la surface lumineuse sont absorbés par les parois du récipient compte tenu de la nature de faible transmission du récipient. Aussi, du fait de la faible transmission du récipient, les rayons de l'éclairage pénétrant le matériau sont atténués lors de la traversée des parois du récipient de façon suffisante afin que leur intensité lumineuse soit trop faible pour former un dédoublement de la singularité optique dans la vue.

Bien entendu, la qualité de forte et faible transmission est en relation avec la composition spectrale de la lumière considérée et donc de la lumière émise par la source lumineuse **5.**

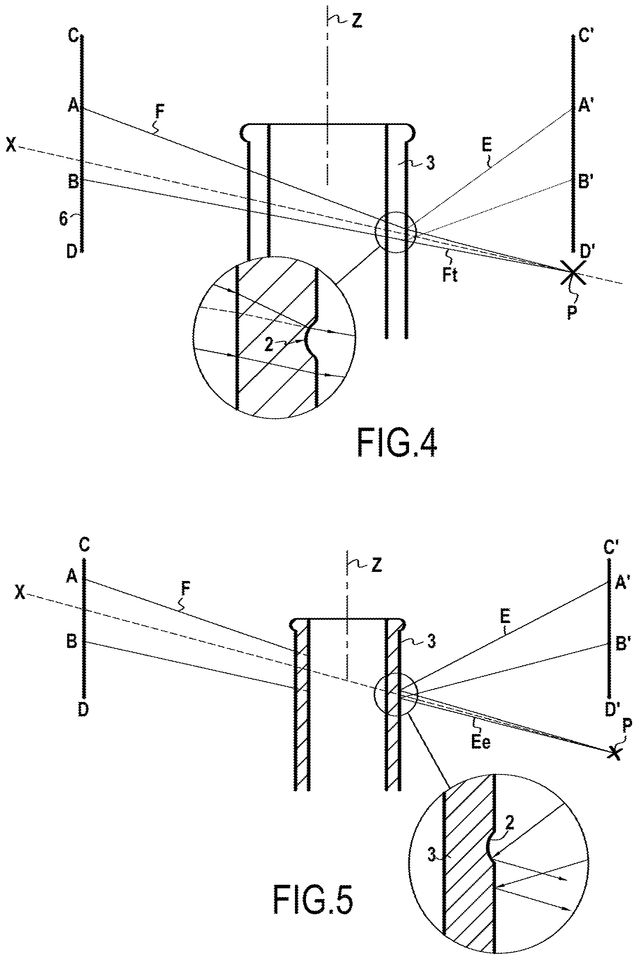

Dans le cas de récipients **3** de forte transmission, le dispositif d'acquisition d'image **11** est positionné et/ou réglé de manière à réaliser la vue de la portion de récipient depuis un point vue **P** recevant les faisceaux lumineux provenant d'une portion de la surface lumineuse de symétrie axiale **6** diamétralement opposée par rapport au récipient **3,** et qui sont transmis à travers les parois du récipient selon les lois de la réfraction. Tel que cela ressort clairement de la **Fig. 4****,** qui illustre un mode de fonctionnement en transmission, le dispositif d'acquisition d'image **11** est positionné et/ou réglé pour récupérer les faisceaux lumineux **F** provenant de la surface lumineuse de symétrie axial **6** et ayant traversé le récipient **3,** tels que les faisceaux issus des points **A** et **B** situés entre les extrêmes **C** et **D.** Le point de vue **P** est diamétralement opposé par rapport au récipient **3** à la partie de surface lumineuse de symétrie axial **6** générant la lumière qu'il observe selon la direction d'observation **X.**

Selon l'invention, et du fait de la symétrie axiale de la source, se trouve à l'opposé de la portion **C, D** de la source, une portion lumineuse diamétralement opposée **C' D'.** Comme illustré dans la **Fig. 4****,** depuis le point de vue **P** et selon une direction d'observation **X,** il est également possible de recevoir les rayons lumineux issus de la portion de la surface lumineuse **6** située du même côté que le point de vue **P** par rapport à l'axe de symétrie , c'est-à-dire la portion de source **C', D',** après leur réflexion sur la paroi de l'article. Toutefois, les rayons issus des points **A', B'** et qui sont réfléchis sur la paroi du récipient possèdent un niveau d'énergie négligeable par rapport à ceux issus des points **A** et **B** et qui sont transmis dans le récipient.

Dans le cas de récipients de faible transmission, le dispositif d'acquisition d'image **11** réalise la vue de la portion de récipient **3** depuis le point de vue **P** et selon une direction d'observation **X** en recevant les faisceaux lumineux provenant d'une portion **C' D'** de la surface lumineuse de symétrie axiale **6** située du même côté du récipient, et qui sont réfléchis par la surface du récipient selon les lois de la réflexion spéculaire. Ainsi, tel que cela ressort plus précisément de la **Fig. 5****,** qui illustre un mode de fonctionnement en réflexion, le dispositif d'acquisition d'image **11** est positionné et/ou réglé pour récupérer les faisceaux lumineux provenant de la surface lumineuse de symétrie axiale **6** et étant réfléchis par le récipient **3.** La **Fig. 5** montre également que la lumière issue de la portion **CD** de la source opposée au point de vue **P** est absorbée par le verre de faible transmission.

Bien entendu, les points de vue **P** peuvent être ajustés en hauteur et/ou les directions d'observation **X** peuvent être ajustées en angle par rapport à l'axe vertical de symétrie **Z** selon les dimensions et par exemple le diamètre de la partie observée du récipient **3** et selon le mode de fonctionnement en transmission ou en réflexion.

Le dispositif **1** selon l'invention permet d'observer et d'analyser des singularités optiques quel que soit le pouvoir de transmission des récipients **3.**

Selon une variante de réalisation, le spectre d'émission de la source de lumière **5** est adapté de manière à augmenter ou réduire voire supprimer l'énergie des faisceaux lumineux transmis à travers les parois **3a** du récipient. En effet, puisque la qualité de forte et faible transmission est en relation avec la composition spectrale de la lumière considérée et donc de la lumière émise par la source lumineuse **5,** il est possible d'améliorer la qualité des images pour le mode de fonctionnement en transmission ou en réflexion, en adaptant le spectre d'émission de la source lumineuse **5** en fonction du spectre de transmission du récipient, de manière à augmenter ou réduire voire supprimer l'énergie des faisceaux lumineux transmis à travers les parois **3a** du récipient. Bien entendu, le spectre de sensibilité du dispositif d'acquisition d'image **11** doit également être pris en compte dans cette adaptation. Selon cette variante, le spectre d'émission de la source lumineuse **5** est adapté par exemple au moyen de filtres, mais de préférence réglable électriquement, par exemple au moyen de combinaisons pilotables de LEDs de couleurs différentes. Dans le mode de fonctionnement en transmission, le spectre d'émission de la source lumineuse **5** est adapté ou réglé de manière à augmenter l'énergie des faisceaux lumineux transmis **Ft,** ces faisceaux acquérant ainsi une énergie nettement supérieure à celle des faisceaux réfléchis **Ee** et **Ei**. Dans le mode de fonctionnement en réflexion, le spectre d'émission de la source lumineuse **5** est adapté ou réglé de manière à réduire voire supprimer l'énergie des faisceaux lumineux transmis **Ft** et **Ei,** ces faisceaux acquérant ainsi une énergie négligeable par rapport à celle des faisceaux réfléchis **Ee**.

Selon une variante de réalisation, le dispositif **1** vise à permettre de réaliser plusieurs vues de la portion du récipient **3** susceptible de contenir des singularités optiques **2,** selon des axes d'observation **X** différents répartis autour de l'axe vertical **Z** du récipient **3,** mais de préférence concourantes en **Z,** afin d'assurer une analyse complète voire redondante de la périphérie du récipient. Ces vues sont obtenues au moyen d'une combinaison de caméras **11** et/ou de systèmes optiques. Dans l'exemple illustré sur les **Fig. 1** et **2****,** le dispositif **1** comporte dix caméras réparties autour de la surface lumineuse de symétrie axiale **6** sans entraver le défilement des récipients **3.** Par exemple le nombre de caméras **11** est inférieur ou égal au nombre de points de vues **P** et de directions d'observation **X.**

Il est à noter que la position des caméras **11** peut ou non correspondre à la position du point de vue **P.** Selon certaines formes de configuration, les dispositifs d'acquisition **11** peuvent comporter, en plus des caméras, des systèmes optiques de renvoi permettant de positionner les caméras en un lieu différent du point de vue **P.** Avantageusement, les systèmes optiques de renvoi sont ajustables de manière à régler l'orientation des axes d'observation **X** et/ou la position des points de vue **P.** Les systèmes optiques de renvoi sont de tous types connu, par exemple des combinaisons de miroir et/ou prismes. Ces dispositifs permettent également si nécessaire que le nombre de caméras **11** soit inférieur au nombre de points de vues **P** et de directions d'observation **X.**

Pour l'analyse des singularités optiques **2** situées sur le col des récipients **3,** il apparait avantageux d'orienter les axes d'observation **X** en contre-plongée soit en agissant sur les caméras **11,** soit en utilisant les systèmes optiques de renvoi, en faisant un angle par exemple compris entre **3°** et **10°** par rapport à l'horizontale. Selon une disposition avantageuse, la source de lumière **5** est située au-dessus d'un plan qui est sécant à la singularité optique **2** alors que les points de vue **P** sont situés au-dessous de ce plan.

Dans les exemples de réalisation qui précèdent, toute la surface lumineuse de symétrie axiale **6** est illuminée simultanément. Il est à noter que la surface lumineuse de symétrie axiale **6** peut être décomposée en secteurs angulaires pouvant être illuminés ou éteints sélectivement. Ainsi, il peut être envisagé d'illuminer séparément et successivement des portions angulaires différentes de la surface lumineuse de symétrie axiale **6** en même temps que l'on acquiert de manière synchrone des vues à partir de points de vues opposés ou du même côté desdites portions angulaires. D'une manière générale, la source de lumière **5** peut être pilotée par tous moyens appropriés en niveau de lumière et/ou en durée d'allumage.

Le dispositif **1** selon l'invention permet de mettre en œuvre un procédé pour observer et analyser des singularités optiques **2** portées en surface ou dans la paroi d'un récipient **3.**

Selon une variante de réalisation, le récipient **3** peut être mis en rotation pour défiler devant une ou plusieurs caméras.

Selon une variante préférée de réalisation, le procédé vise à assurer le défilement des récipients, sans rotation de ces récipients autour de leur axe de symétrie **S,** selon une direction de translation instantanée perpendiculaire et sensiblement sécante à l'axe vertical **Z** de la surface lumineuse de symétrie axiale **6.** Selon cette variante préférée de réalisation, des passages **6₁, 6₂** pour une partie des récipients sont aménagés dans la surface lumineuse de symétrie axiale pour permettre le défilement des récipients selon une trajectoire déterminée.

En particulier, un dispositif **1** selon l'invention, comportant plusieurs points de vue **P** répartis autour du récipient, avec des directions d'observation **X** en contreplongée, concourantes avec l'axe vertical **Z** et dirigées vers le col des récipients, une surface lumineuse de symétrie axiale **6** d'axe vertical **Z,** présentant selon une génératrice, une variation monotone de propriété de lumière mesurable par les systèmes d'acquisition d'image **11,** est apte sans modification à fonctionner selon les modes réflexion et/ou transmission en fonction des récipients, à lire des codes Datamatrix de faible contraste obtenus par marquage laser du col des récipients et ce dans un seul poste de contrôle pour des récipients en défilement linéaire.

L'invention n'est pas limitée aux exemples décrits et représentés car diverses modifications peuvent y être apportées sans sortir de son cadre.

## Revendications

1. Procédé d'observation et d'analyse de singularités optiques (**2**), déviant la lumière, portées en surface ou dans la paroi d'un récipient (**3**) en verre possédant un axe de symétrie (**S**), consistant :
- à éclairer le récipient au moyen d'une source de lumière diffuse (**5**) présentant une variation d'une propriété de la lumière selon une direction de variation,
- à disposer d'au moins un dispositif d'acquisition d'images sensible à ladite propriété de la lumière et à sa variation, afin de réaliser au moins une vue d'une portion de récipient susceptible de contenir des singularités optiques observées à partir d'au moins un point de vue (**P**) selon un axe d'observation (**X**),
- et à traiter au moins une vue afin d'analyser les singularités optiques,
**caractérisé en ce qu'**il consiste :
- à éclairer l'extérieur (**3e**) du récipient à l'aide d'une surface lumineuse de symétrie axiale (**6**) autour d'un axe vertical (**Z**) parallèle à l'axe de symétrie (**S**) des récipients, avec la direction de variation de la propriété de la lumière suivant une génératrice de la surface lumineuse en tout point de la surface lumineuse,
- dans le cas de récipients de faible transmission, à réaliser la vue de la portion de récipient par le dispositif d'acquisition d'images recevant les faisceaux lumineux provenant d'une portion de la surface lumineuse de symétrie axiale (**6**) située du même côté du récipient que le point de vue (**P**), et qui sont réfléchis par la surface du récipient selon les lois de la réflexion spéculaire,
- et dans le cas de récipients de forte transmission, à réaliser la vue de la portion de récipient par le dispositif d'acquisition d'images recevant les faisceaux lumineux provenant d'une portion de la surface lumineuse de symétrie axiale (**6**) diamétralement opposée au point de vue (**P**) par rapport au récipient et qui sont transmis à travers les parois (**3a**) du récipient selon les lois de la réfraction.

2. Procédé d'observation et d'analyse selon la revendication 1, **caractérisé en ce qu'**il consiste à considérer les récipients (**3**) comme de forte transmission lorsque apparaissent dans l'image, de manière à interférer avec l'observation des singularités optiques, des taches parasites générées par des rayons lumineux parasites se propageant sans atténuation dans la paroi et à considérer comme de faible transmission des récipients (**3**) dans lesquels lesdits rayons lumineux parasites sont absorbés par la teinte du matériau au point de ne pas perturber l'analyse des singularités optiques.

3. Procédé d'observation et d'analyse selon la revendication 1, **caractérisé en ce qu'**il consiste à assurer le défilement des récipients (**3**), sans rotation autour de leur axe (**S**), selon une direction de déplacement (**f**) perpendiculaire et sensiblement sécante à l'axe de symétrie vertical (**Z**) de la surface lumineuse de symétrie axiale (**6**).

4. Procédé d'observation et d'analyse selon la revendication 3, **caractérisé en ce qu'**il consiste à aménager dans deux côtés opposés de la surface lumineuse de symétrie axiale (**6**), des passages (**6₁, 6₂**) pour au moins une partie du récipient en défilement.

5. Procédé d'observation et d'analyse selon la revendication 1, **caractérisé en ce qu'**il consiste à réaliser plusieurs vues de la portion du récipient (**3**) susceptibles de contenir des singularités optiques (**2**), selon des axes d'observation (**X**) différents répartis angulairement autour de l'axe vertical du récipient afin d'assurer une analyse complète voire redondante de la périphérie du récipient.

6. Procédé d'observation et d'analyse selon l'une des revendications 1 à 5, **caractérisé en ce qu'**il consiste à réaliser plusieurs vues obtenues au moyen d'une combinaison de caméras et de systèmes optiques de manière que le nombre de caméras soit inférieur ou égal au nombre de points de vues et de directions d'observation.

7. Procédé d'observation et d'analyse selon l'une des revendications 1 à 6, **caractérisé en ce qu'**il consiste à orienter les axes d'observation (**X**) en contre-plongée pour l'analyse des singularités optiques (**2**) situées sur le col (**3₁**) des récipients.

8. Procédé d'observation et d'analyse selon l'une des revendications 1 à 7, **caractérisé en ce que** l'analyse consiste à analyser comme singularités optiques (**2**) des marquages et les interpréter pour obtenir une information relative au récipient ou à sa fabrication pour au moins une des opérations parmi le tri, le traçage, l'identification, la datation, l'authentification du récipient.

9. Procédé d'observation et d'analyse selon l'une des revendications 1 à 7, **caractérisé en ce que** l'analyse consiste à détecter et/ou identifier les singularités optiques en tant que défauts des récipients.

10. Procédé d'observation et d'analyse selon l'une des revendications 1 à 9, **caractérisé en ce que** lors de l'observation d'un récipient, on illumine séparément et successivement des portions angulaires différentes de la surface lumineuse de symétrie axiale (**6**) en même temps que l'on acquiert de manière synchrone à leur allumage, des vues à partir de points de vues opposés ou du même côté par rapport au récipient (**3**) desdites portions angulaires.

11. Procédé d'observation et d'analyse selon l'une des revendications 1 à 10, **caractérisé en ce qu'**il consiste à éclairer avec une source de lumière diffuse (**5**) dont la propriété de la lumière qui varie suivant une génératrice de la surface lumineuse de symétrie axiale est l'exitance de la surface lumineuse.

12. Procédé d'observation et d'analyse selon l'une des revendications 1 à 10, **caractérisé en ce que** la propriété de la lumière qui varie suivant une génératrice de la surface lumineuse de symétrie axiale est la couleur de lumière émise.

13. Procédé d'observation et d'analyse selon l'une des revendications 1 à 10, **caractérisé en ce que** le spectre d'émission de la source de lumière (**5**) est adapté de manière à augmenter ou réduire voire supprimer l'énergie des faisceaux lumineux transmis à travers les parois (**3a**) du récipient.

14. Dispositif d'observation et d'analyse de singularités optiques déviant la lumière, portées en surface ou dans la paroi d'un récipient (**3**) en verre possédant un axe de symétrie (**S**), comprenant :
- une source de lumière diffuse (**5**) présentant une variation d'une propriété de la lumière selon une direction de variation,
- au moins un dispositif d'acquisition d'images (**11**) afin de réaliser au moins une vue d'une portion de récipient susceptible de contenir des singularités optiques observées à partir d'au moins un point de vue (**P**) selon un axe d'observation (**X**),
- des moyens de traitement d'au moins une vue afin d'analyser les singularités,
**caractérisé en ce que** :
- la surface lumineuse est positionnée pour éclairer l'extérieur du récipient, cette surface étant une surface de symétrie axiale (**6**) autour d'un axe vertical (**Z**) parallèle à l'axe de symétrie (**S**) des récipients, avec en tout point de la surface lumineuse de symétrie axiale, la direction de variation de la propriété de la lumière suivant une génératrice de la surface lumineuse,
- dans le cas de récipients (**3**) de faible transmission, le dispositif d'acquisition d'image (**11**) est apte à réaliser la vue de la portion de récipient depuis un point de vue (**P**) pour recevoir les faisceaux lumineux provenant d'une portion de la surface lumineuse de symétrie axiale (**6**) située du même côté du récipient que le point de vue (**P**), et qui sont réfléchis par la surface du récipient,
- et dans le cas de récipients (**3**) de forte transmission, le dispositif d'acquisition d'image est apte à réaliser la vue de la portion de récipient depuis un point vue (**P**) pour recevoir les faisceaux lumineux provenant d'une portion de la surface lumineuse de symétrie axiale (**6**) diamétralement opposée au point de vue (**P**) par rapport au récipient, et qui sont transmis à travers les parois (**3a**) du récipient.

15. Dispositif selon la revendication 14, **caractérisé en ce que** la surface lumineuse de symétrie axiale (**6**) est une surface de révolution, par exemple un cylindre, un tronçon de cône, un hémisphère ou un disque.

16. Dispositif selon la revendication 14, **caractérisé en ce que** l'exitance de la surface lumineuse de symétrie axiale (**6**) varie en tout point de la surface lumineuse de symétrie axiale, suivant une génératrice de ladite surface.

17. Dispositif selon la revendication 14, **caractérisé en ce que** la couleur de lumière émise par la surface lumineuse de symétrie axiale (**6**) varie en tout point de la surface lumineuse de symétrie axiale, suivant une génératrice de ladite surface.

18. Dispositif selon l'une des revendications 14 à 17, **caractérisé en ce que** la source de lumière (**5**) comporte au moins un anneau d'éclairage (**8**) éclairant l'extrémité inférieure ou supérieure d'un diffuseur cylindrique ou tronconique.

19. Dispositif selon l'une des revendications 14 à 16, **caractérisé en ce que** la source lumineuse de symétrie axiale (**6**) comporte un anneau d'éclairage éclairant un hémisphère diffuseur de la lumière, à l'opposé de son plan équatorial, de manière variable en fonction du point du diffuseur considéré mais à symétrie d'axe égal à l'axe de l'hémisphère.

20. Dispositif selon l'une des revendications 14 à 16, **caractérisé en ce que** la source de lumière (**5**) comporte un disque diffuseur plan éclairé en son centre par une source ou à sa périphérie par un anneau d'éclairage, de manière variable en fonction du point du diffuseur considéré mais à symétrie d'axe égal à l'axe du disque.

21. Dispositif selon l'une des revendications 14 à 20, **caractérisé en ce que** le spectre d'émission de la source de lumière (**5**) est adapté de manière à augmenter ou réduire voire supprimer l'énergie des faisceaux lumineux transmis à travers les parois (**3a**) du récipient.

22. Dispositif selon l'une des revendications 14 à 17, **caractérisé en ce que** la source de lumière (**5**) comporte un diffuseur éclairé complètement et contre lequel est plaqué d'un côté ou de l'autre, un film dont la transmission varie au moins pour une longueur d'onde suivant une génératrice de la surface lumineuse.

23. Dispositif selon la revendication 14, **caractérisé en ce que** la surface lumineuse de symétrie axiale (**6**) comporte différents secteurs angulaires pilotés sélectivement en allumage et/ou extinction.

24. Dispositif selon i'une des revendications 14 ou 15, **caractérisé en ce que** la surface lumineuse de symétrie axiale (**6**) est pourvue d'un passage d'entrée (**6₁**) et d'un passage de sortie (**6₂**) pour une partie d'un récipient, disposés symétriquement par rapport à l'axe vertical (**Z**).

25. Dispositif selon l'une des revendications 14 à 24, **caractérisé en ce qu'**il comporte une série de dispositifs d'acquisition d'image (**11**) placés autour de l'axe vertical pour observer le récipient selon plusieurs vues permettant d'observer toute ou partie de sa périphérie.

26. Dispositif selon l'une des revendications 14 à 24, **caractérisé en ce que** les dispositifs d'acquisition d'image (**11**) sont positionnés avec un axe d'observation (**X**) en contre-plongée faisant un angle compris entre 3° et 10° par rapport à l'horizontale.

## Patentansprüche

1. Verfahren zur Beobachtung und Analyse von optischen Singularitäten (2), die das Licht ablenken, die auf der Oberfläche oder in der Wand eines Glasbehälters (3), der eine Symmetrieachse (S) aufweist, vorhanden sind, das darin besteht:
- den Behälter mit einer diffusen Lichtquelle (5) zu beleuchten, die eine Variation einer Eigenschaft des Lichts in einer Richtung der Variation aufweist,
- über mindestens eine Bildaufnahmevorrichtung zu verfügen, die gegenüber der Eigenschaft des Lichts und dessen Variation empfindlich ist, um mindestens eine Ansicht eines Behälterabschnitts zu erstellen, der optische Singularitäten enthalten kann, die ausgehend von mindestens einem Ansichtspunkt (P) entlang einer Beobachtungsachse (X) beobachtet werden,
- und mindestens eine Ansicht zu verarbeiten, um die optischen Singularitäten zu analysieren,
**dadurch gekennzeichnet, dass** es darin besteht:
- die Außenseite (3e) des Behälters mit einer achsensymmetrischen Leuchtfläche (6) um eine vertikale Achse (Z), die parallel zu der Symmetrieachse (S) der Behälter ist, zu beleuchten, wobei die Richtung der Variation der Eigenschaft des Lichts einer Mantelline der Leuchtfläche an jedem Punkt der Leuchtfläche folgt,
- bei Behältern mit geringer Lichtdurchlässigkeit die Ansicht des Behälterabschnitts durch die Bildaufnahmevorrichtung zu erstellen, die die Lichtstrahlen empfängt, die von einem Abschnitt der achsensymmetrischen Leuchtfläche (6) kommen, der sich auf derselben Seite des Behälters wie der Ansichtspunkt (P) befindet, und die von der Oberfläche des Behälters gemäß den Gesetzen der Spiegelreflexion reflektiert werden,
- und bei Behältern mit großer Lichtdurchlässigkeit die Ansicht des Behälterabschnitts durch die Bildaufnahmevorrichtung zu erstellen, die die Lichtstrahlen empfängt, die von einem Abschnitt der achsensymmetrischen Leuchtfläche (6) kommen, der diametral gegenüberliegend von dem Ansichtspunkt (P) in Bezug auf den Behälter angeordnet ist, und die gemäß den Gesetzen der Lichtbrechung durch die Wände (3a) des Behälters übertragen werden.

2. Verfahren zur Beobachtung und Analyse nach Anspruch 1, **dadurch gekennzeichnet, dass** es darin besteht, die Behälter (3) als stark lichtdurchlässig zu betrachten, wenn sie derart im Bild erscheinen, dass sie die Beobachtung der optischen Singularitäten stören, wobei sich parasitäre Flecken, die durch parasitäre Lichtstrahlen erzeugt werden, ungemindert in der Wand ausbreiten, und Behälter (3) als schwach lichtdurchlässig zu betrachten, in denen die parasitären Lichtstrahlen von der Farbe des Materials derart absorbiert werden, dass sie die Analyse der optischen Singularitäten nicht stören.

3. Verfahren zur Beobachtung und Analyse nach Anspruch 1, **dadurch gekennzeichnet, dass** es darin besteht, das Vorbeilaufen der Behälter (3) ohne Drehung um ihre Achse (S) in einer Bewegungsrichtung (f) zu gewährleisten, die senkrecht zu der vertikalen Symmetrieachse (Z) der achsensymmetrische Leuchtfläche (6) ist und diese vertikale Symmetrieachse im Wesentlichen schneidet.

4. Verfahren zur Beobachtung und Analyse nach Anspruch 3, **dadurch gekennzeichnet, dass** es darin besteht, an zwei gegenüberliegenden Seiten der achsensymmetrischen Leuchtfläche (6) Durchgänge (6₁, 6₂) für mindestens einen Teil des vorbeilaufenden Behälters einzurichten.

5. Verfahren zur Beobachtung und Analyse nach Anspruch 1, **dadurch gekennzeichnet, dass** es darin besteht, mehrere Ansichten des Abschnitts des Behälters (3), die optische Singularitäten (2) enthalten können, entlang verschiedener Beobachtungsachsen (X) zu erstellen, die winklig um die vertikale Achse des Behälters verteilt sind, um eine vollständige oder sogar redundante Analyse des Umfangs des Behälters zu gewährleisten.

6. Verfahren zur Beobachtung und Analyse nach einem der Ansprüche 1 bis 5, **dadurch gekennzeichnet, dass** es darin besteht, mehrere Ansichten, die mit Hilfe von einer Kombination von Kameras und optischen Systemen erhalten werden, derart zu erstellen, dass die Anzahl von Kameras kleiner oder gleich der Anzahl der Betrachtungspunkte und der Beobachtungsrichtungen ist.

7. Verfahren zur Beobachtung und Analyse nach einem der Ansprüche 1 bis 6, **dadurch gekennzeichnet, dass** es darin besteht, die Beobachtungsachsen (X) für die Analyse der optischen Singularitäten (2), die sich am Hals (3₁) der Behälter befinden, in der Unteransicht auszurichten.

8. Verfahren zur Beobachtung und Analyse nach einem der Ansprüche 1 bis 7, **dadurch gekennzeichnet, dass** es darin besteht, Markierungen als optische Singularitäten (2) zu analysieren und sie zu deuten, um eine Information in Bezug auf den Behälter oder seine Herstellung für mindestens einen der Vorgänge unter dem Sortieren, dem Rückverfolgen, dem Identifizieren, dem Datieren, dem Authentifizieren des Behälters zu erhalten.

9. Verfahren zur Beobachtung und Analyse nach einem der Ansprüche 1 bis 7, **dadurch gekennzeichnet, dass** die Analyse darin besteht, die optischen Singularitäten als Mängel der Behälter zu erfassen und/oder zu identifizieren.

10. Verfahren zur Beobachtung und Analyse nach einem der Ansprüche 1 bis 9, **dadurch gekennzeichnet, dass** bei der Beobachtung eines Behälters verschiedene Winkelabschnitte der achsensymmetrischen Leuchtfläche (6) getrennt und nacheinander beleuchtet werden, während gleichzeitig synchron mit ihrem Beleuchten Ansichten ausgehend von gegenüberliegenden Betrachtungspunkten oder von Betrachtungspunkten von der gleichen Seite in Bezug auf den Behälter (3) der Winkelabschnitte erworben werden.

11. Verfahren zur Beobachtung und Analyse nach einem der Ansprüche 1 bis 10, **dadurch gekennzeichnet, dass** es darin besteht, mit einer diffusen Lichtquelle (5) zu beleuchten, deren Lichteigenschaft, die sich entlang einer Mantelline der Leuchtfläche der achsensymmetrischen Leuchtfläche ändert, die spezifische Ausstrahlung der Lichtfläche ist.

12. Verfahren zur Beobachtung und Analyse nach einem der Ansprüche 1 bis 10, **dadurch gekennzeichnet, dass** die Lichteigenschaft, die sich entlang einer Mantelline der Leuchtfläche der achsensymmetrischen Leuchtfläche ändert, die Farbe des emittierten Lichts ist.

13. Verfahren zur Beobachtung und Analyse nach einem der Ansprüche 1 bis 10, **dadurch gekennzeichnet, dass** das Emissionsspektrum der Lichtquelle (5) derart abgestimmt ist, um die Energie der Lichtstrahlen, die durch die Wände (3a) des Behälters übertragenen werden, zu erhöhen oder zu verringern oder sogar zu eliminieren.

14. Vorrichtung zur Beobachtung und Analyse von optischen Singularitäten, die das Licht ablenken, die auf der Oberfläche oder in der Wand eines Glasbehälters (3), der eine Symmetrieachse (S) aufweist, vorhanden sind, umfassend:
- eine diffuse Lichtquelle (5), die eine Variation einer Eigenschaft des Lichts in einer Richtung der Variation aufweist,
- mindestens eine Bildaufnahmevorrichtung (11), um mindestens eine Ansicht eines Behälterabschnitts zu erstellen, der optische Singularitäten enthalten kann, die ausgehend von mindestens einem Ansichtspunkt (P) entlang einer Beobachtungsachse (X) beobachtet werden,
- Mittel zum Verarbeiten der mindestens einen Ansicht, um die optischen Singularitäten zu analysieren,
**dadurch gekennzeichnet, dass**:
- die Leuchtfläche angeordnet ist, um die Außenseite des Behälters zu beleuchten, wobei diese Fläche eine achsensymmetrische Leuchtfläche (6) um eine vertikale Achse (Z) ist, die parallel zu der Symmetrieachse (S) der Behälter ist, wobei die Richtung der Variation der Eigenschaft des Lichts an jedem Punkt der Leuchtfläche einer Mantelline der Leuchtfläche folgt,
- bei Behältern (3) mit geringer Lichtdurchlässigkeit die Bildaufnahmevorrichtung (11) geeignet ist, die Ansicht des Behälterabschnitts von einem Ansichtspunkt (P) zu erstellen, um die Lichtstrahlen zu empfangen, die von einem Abschnitt der achsensymmetrischen Leuchtfläche (6) kommen, der sich auf derselben Seite des Behälters wie der Ansichtspunkt (P) befindet, und die von der Oberfläche des Behälters reflektiert werden,
- und bei Behältern (3) mit geringer Lichtdurchlässigkeit die Bildaufnahmevorrichtung (11) geeignet ist, die Ansicht des Behälterabschnitts von einem Ansichtspunkt (P) zu erstellen, um die Lichtstrahlen zu empfangen, die von einem Abschnitt der achsensymmetrischen Leuchtfläche (6) kommen, der diametral gegenüberliegend von dem Ansichtspunkt (P) in Bezug auf den Behälter angeordnet ist, und die durch die Wände (3a) des Behälters übertragen werden.

15. Vorrichtung nach Anspruch 14, **dadurch gekennzeichnet, dass** die achsensymmetrische Leuchtfläche (6) eine Rotationsfläche, beispielsweise ein Zylinder, ein Kegelstumpf, eine Halbkugel oder eine Scheibe ist.

16. Vorrichtung nach Anspruch 14, **dadurch gekennzeichnet, dass** die achsensymmetrische Leuchtfläche (6) an jedem Punkt der achsensymmetrischen Leuchtfläche entlang einer Mantellinie dieser Fläche variiert.

17. Vorrichtung nach Anspruch 14, **dadurch gekennzeichnet, dass** die Farbe des Lichts, das von der achsensymmetrischen Leuchtfläche (6) emittiert wird, an jedem Punkt der achsensymmetrischen Leuchtfläche entlang einer Mantellinie dieser Fläche variiert.

18. Vorrichtung nach einem der Ansprüche 14 bis 17, **dadurch gekennzeichnet, dass** die Lichtquelle (5) mindestens einen Beleuchtungsring (8) aufweist, der das untere oder obere Ende eines zylindrischen oder kegelstumpfförmigen Diffusors beleuchtet.

19. Vorrichtung nach einem der Ansprüche 14 bis 16, **dadurch gekennzeichnet, dass** die achsensymmetrische Lichtquelle (6) einen Beleuchtungsring aufweist, der eine lichtstreuende Halbkugel, die seiner Äquatorialebene gegenüberliegt, variabel in Abhängigkeit von dem betreffenden Punkt des Diffusors, aber mit Achsensymmetrie gleich der Achse der Hemisphäre beleuchtet.

20. Vorrichtung nach einem der Ansprüche 14 bis 16, **dadurch gekennzeichnet, dass** die Lichtquelle (5) eine flache Diffusorscheibe aufweist, die in ihrer Mitte von einer Quelle oder an ihrem Umfang von einem Lichtring variabel in Abhängigkeit von dem betreffenden Punkt des Diffusors, aber mit Achsensymmetrie gleich der Achse der Scheibe beleuchtet wird.

21. Vorrichtung nach einem der Ansprüche 14 bis 20, **dadurch gekennzeichnet, dass** das Emissionsspektrum der Lichtquelle (5) derart abgestimmt ist, um die Energie der Lichtstrahlen, die durch die Wände (3a) des Behälters übertragenen werden, zu erhöhen oder zu verringern oder sogar zu eliminieren.

22. Vorrichtung nach einem der Ansprüche 14 bis 17, **dadurch gekennzeichnet, dass** die Lichtquelle (5) einen Diffusor aufweist, der vollständig beleuchtet ist und gegen den auf der einen oder der anderen Seite eine Folie plattiert ist, deren Lichtdurchlässigkeit mindestens für eine Wellenlänge entlang einer Mantellinie der Lichtoberfläche variiert.

23. Vorrichtung nach Anspruch 14, **dadurch gekennzeichnet, dass** die achsensymmetrische Leuchtfläche (6) verschiedene Winkelsektoren aufweist, die beim Ein- und/oder Ausschalten selektiv gesteuert werden.

24. Vorrichtung nach einem der Ansprüche 14 oder 15, **dadurch gekennzeichnet, dass** die achsensymmetrische Lichtquelle (6) mit einem Einlassdurchgang (6₁) und einem Auslassdurchgang (6₂) für einen Teil eines Behälters versehen ist, die symmetrisch in Bezug auf die vertikale Achse (Z) angeordnet sind.

25. Vorrichtung nach einem der Ansprüche 14 bis 24, **dadurch gekennzeichnet, dass** sie eine Reihe von Bildaufnahmevorrichtungen (11) aufweist, die um die vertikale Achse angeordnet sind, um den Behälter in mehreren Ansichten zu beobachten, wodurch es möglich ist, seinen gesamten Umfang oder einen Teil davon zu beobachten.

26. Vorrichtung nach einem der Ansprüche 14 bis 24, **dadurch gekennzeichnet, dass** die Bildaufnahmevorrichtungen (11) mit einer Beobachtungsachse (X) in der Unteransicht angeordnet sind, die einen Winkel zwischen 3° und 10° relativ zur Horizontalen bildet.

## Claims

1. An observation and analysis method for observing and analyzing optical singularities (2) that deflect light and that are carried at the surface or in the wall of a container (3) made of glass and possessing an axis of symmetry (S), the method consisting in:
• illuminating the container by means of a diffuse light source (5) presenting variation in a property of light along a variation direction;
• placing at least one image acquisition device sensitive to said property of light and to its variation so as to take at least one view of a container portion that might contain optical singularities when observed from at least one viewpoint (P) along an observation axis (X); and
• processing at least one view in order to analyze the optical singularities;
the method being **characterized in that** it consists in:
• illuminating the outside (3e) of the container by using a light-emitting surface (6) of axial symmetry around a vertical axis (Z) parallel to the axis of symmetry (S) of the containers, with the variation direction of the light property running along a generator line of the light-emitting surface at all points of the light-emitting surface;
• with containers of low transmittance, taking the view of the container portion by the image acquisition device receiving light beams coming from a portion of the light-emitting surface (6) of axial symmetry situated on the same side of the container as the viewpoint (P), which beams are reflected by the surface of the container in application of the laws of specular reflection;
• and
with containers of high transmittance, taking the view of the container portion by the image acquisition device receiving light beams coming from a portion of the light-emitting surface (6) of axial symmetry that is diametrically opposite from the viewpoint (P) relative to the container, which beams have been transmitted through the walls (3a) of the container in application of the laws of refraction.

2. An observation and analysis method according to claim 1, **characterized in that** it consists in considering that containers (3) have high transmittance when interfering spots appear in the image so as to interfere with the observation of optical singularities, where the spots are generated by interfering light rays propagating without attenuation through the wall, and in considering that containers (3) are of low transmittance when said interfering light rays are absorbed by the tint of the material to such an extent as to avoid disturbing the analysis of optical singularities.

3. An observation and analysis method according to claim 1, **characterized in that** it consists in causing containers (3) to travel, without rotating about their axes (S), along a travel direction (f) perpendicular to and substantially intersecting the vertical axis of symmetry (Z) of the light-emitting surface (6) of axial symmetry.

4. An observation and analysis method according to claim 3, **characterized in that** it consists in providing passages (6₁, 6₂) in two opposite sides of the light-emitting surface (6) of axial symmetry for passing at least a portion of a traveling container.

5. An observation and analysis method according to claim 1, **characterized in that** it consists in taking a plurality of views of the portion of the container (3) that might contain optical singularities (2) along different observation axes (X) that are distributed angularly around the vertical axis of the container so as to ensure that the periphery of the container is analyzed completely or even redundantly.

6. An observation and analysis method according to any one of claims 1 to 5, **characterized in that** it consists in taking a plurality of views obtained by means of a combination of cameras and optical systems so that the number of cameras is less than or equal to the number of viewpoints and of observation directions.

7. An observation and analysis method according to any one of claims 1 to 6, **characterized in that** it consists in pointing the observation axes (X) upwards in order to analyze the optical singularities (2) situated on the necks (3₁) of the containers.

8. An observation and analysis method according to any one of claims 1 to 7, **characterized in that** the analysis consists in analyzing marks as optical singularities (2) and in interpreting them in order to obtain information about the container or its fabrication for at least one operation selected from: sorting, tracing, identifying dating, and authenticating the container.

9. An observation and analysis method according to any one of claims 1 to 7, **characterized in that** the analysis consists in detecting and/or identifying optical singularities as defects of the containers.

10. An observation and analysis method according to any one of claims 1 to 9, **characterized in that** when observing a container, different angular portions of the light-emitting surface (6) of axial symmetry are illuminated separately and in succession while simultaneously acquiring views synchronously with the illumination of the angular portions, the views being taken from viewpoints that are opposite from or on the same side as said angular portions relative to the container (3).

11. An observation and analysis method according to any one of claims 1 to 10, **characterized in that** it consists in illuminating with a diffuse light source (5) in which the light property that varies along a generator line of the light-emitting surface of axial symmetry is the luminous exitance of the light-emitting surface.

12. An observation and analysis method according to any one of claims 1 to 10, **characterized in that** the light property that varies along a generator line of the light-emitting surface of axial symmetry is the color of the emitted light.

13. An observation and analysis method according to any one of claims 1 to 10, **characterized in that** the emission spectrum of the light source (5) is adapted so as to increase or else reduce or even eliminate the energy of the light beams transmitted through the walls (3a) of the container.

14. A device for observing and analyzing optical singularities that deflects light and that are carried at the surface of or in the wall of a glass container (3) possessing an axis of symmetry (S), the device comprising:
• a diffuse light source (5) presenting variation of a property of light along a variation direction;
• at least one image acquisition device (11) for taking at least one view of a container portion that might contain optical singularities observed from at least one viewpoint (P) along an observation axis (X); and
• means for processing at least one view in order to analyze the singularities;
the device being **characterized in that**:
• the light-emitting surface is positioned to illuminate the outside of the container, said surface being a surface (6) of axial symmetry about a vertical axis (Z) parallel to the axes of symmetry (S) of the containers, with the light property varying along a generator line of the light-emitting surface along the variation direction at all points of the light-emitting surface of axial symmetry;
• for containers (3) of low transmittance, the image acquisition device (11) is suitable for taking the view of the container portion from a viewpoint (P) in order to receive the light beams coming from a portion of the light-emitting surface (6) of axial symmetry that is situated on the same side of the container as the viewpoint (P), which beams are reflected by the surface of the container;
• and
for containers (3) of high transmittance, the image acquisition device is suitable for taking the view of the container portion from a viewpoint (P) for receiving light beams coming from a portion of the light-emitting surface (6) of axial symmetry that is diametrically opposite from the viewpoint (P) relative to the container, which beams are transmitted through the walls (3a) of the container.

15. A device according to claim 14, **characterized in that** the light-emitting surface (6) of axial symmetry is a surface of revolution, e.g. a cylinder, a truncated cone, a hemisphere, or a disk.

16. A device according to claim 14, **characterized in that** the luminous exitance of the light-emitting surface (6) of axial symmetry varies at all points of the light-emitting surface of axial symmetry along a generator line of said surface.

17. A device according to claim 14, **characterized in that** the color of the light emitted by the light-emitting surface (6) of axial symmetry varies at all points of the light-emitting surface of axial symmetry along a generator line of said surface.

18. A device according to any one of claims 14 to 17, **characterized in that** the light source (5) includes at least one lighting ring (8) illuminating the bottom or top end of a cylindrical or frustoconical diffuser.

19. A device according to any one of claims 14 to 16, **characterized in that** the luminous source (6) of axial symmetry includes a lighting ring illuminating a light diffusing hemisphere opposite from its equatorial plane, in a manner that varies as a function of the point under consideration of the diffuser, but with axial symmetry relative to the axis of the hemisphere.

20. A device according to any one of claims 14 to 16, **characterized in that** the light source (5) includes a plane diffuser disk illuminated at its center by a source or at its periphery by a lighting ring, in a manner that varies as a function of the point under consideration of the diffuser, but with axial symmetry relative to the axis of the disk.

21. A device according to any one of claims 14 to 20, **characterized in that** the emission spectrum of the light source (5) is adapted so as to increase or else reduce or even eliminate the energy of light beams transmitted through the walls (3a) of the container.

22. A device according to any one of claims 14 to 17, **characterized in that** the light source (5) includes a diffuser that is completely illuminated and against which there is placed on one side or the other a film of transmission that varies, at least for one wavelength, along a generator line of the light-emitting surface.

23. A device according to claim 14, **characterized in that** the light-emitting surface (6) of axial symmetry has a plurality of angular sectors that are controlled to be switched on and/or off selectively.

24. A device according to claim 14 or claim 15, **characterized in that** the light-emitting surface (6) of axial symmetry is provided with an entry passage (6₁) and an exit passage (6₂) for a portion of a container, which passages are arranged symmetrically about the vertical axis (Z).

25. A device according to any one of claims 14 to 24, **characterized in that** it includes a series of image acquisition devices (11) placed around the vertical axis in order to observe the container from a plurality of viewpoints enabling all or part of the periphery of the container to be observed.

26. A device according to any one of claims 14 to 24, **characterized in that** the image acquisition devices (11) are positioned with an observation axis (X) pointing upwards at an angle lying in the range 3° to 10° relative to the horizontal.
